# EUROPÄISCHE PATENTSCHRIFT

(11) **EP 0 666 635 B1**
(45) Veröffentlichungstag und Bekanntmachung des Hinweises auf die Patenterteilung: **03.06.1998**
(21) Anmeldenummer: 95100576.8
(22) Anmeldetag: 18.01.1995
(51) Int. Cl.: H02K 35/02, E03C 1/05

(54) **Einrichtung zur Umwandlung von in Fluidsystemen herrschenden Druckschwankungen in elektrische Energie**
Device to transform pressure variations occurring in fluid systems in electrical energy
Dispositif pour transformer les variations de pression occurrant au sein de systèmes de fluides en énergie électrique

(30) Priorität: 02.02.1994 DE 4403180
(43) Veröffentlichungstag der Anmeldung: 09.08.1995
(73) Patentinhaber: HANSA METALLWERKE AG, D-70567 Stuttgart (DE)
(72) Erfinder: Kunkel, Horst, D-70499 Stuttgart (DE)
(74) Vertreter: Ostertag, Ulrich

(56) Entgegenhaltungen:
- EP-A- 0 433 631
- WO-A-81/00274
- DE-A- 2 355 728
- DE-A- 2 831 742
- DE-C- 397 454
- US-A- 3 906 960
- US-A- 4 645 965

## Beschreibung

Die Erfindung betrifft eine Einrichtung zur Umwandlung von mechanischer in elektrische Energie, welche umfaßt:
a) ein Gehäuse,
b) mindestens eine in dem Gehäuse gebildete Kammer, welche an der einen Seite durch eine Wand begrenzt ist, die hin- und her bewegbar ist,
c) mindestens eine Einrichtung, die mit der bewegbaren Wand verbunden ist und die von dieser übertragene mechanische Energie in elektrische Energie umwandelt;

Im Sanitärwesen werden in jüngster Zeit zunehmend elektrisch gesteuerte, insbesondere berührungslos gesteuerte Armaturen eingesetzt. Dabei wird immer mehr angestrebt, diese Armaturen netzspannungsunabhängig zu betreiben, also mit einer autarken Stromquelle zu versehen. Dies verbilligt die elektrische Armatur nicht nur außerordentlich; sie läßt sich auch sehr viel einfacher montieren, ggf. auch nachrüsten und unterliegt keinen psychologischen Problemen beim Benutzer, der häufig einen Netzanschluß im Naßbereich scheut und deshalb auf eine elektrisch betätigte Armatur lieber verzichtet. Rüstet man die elektrisch betätigte Armatur mit einer Batterie oder einem Akkumulator alleine aus, so muß entweder die Batterie in regelmäßigen Abständen ausgetauscht oder der Akkumulator wieder aufgeladen werden. Neigt sich der Ladungszustand der Batterie oder des Akkumulators dem Ende zu, besteht die Gefahr, daß die Armaturenfunktion nicht mehr ordnungsgemäß abläuft.

Es wurden daher in der Vergangenheit verschiedene Versuche unternommen, zur Wiederaufladung eines Akkumulators innerhalb der Sanitärarmatur oder auch zu deren direktem Betrieb regenerative Stromquellen einzusetzen, die ihre Energie aus der Umgebung beziehen, in welcher die Sanitärarmatur angeordnet ist. So wurde beispielsweise die Verwendung von Solarzellen vorgeschlagen, die allerdings in den häufig nicht sehr stark beleuchteten Räumen, in denen Sanitärarmaturen eingesetzt sind, nicht besonders wirksam sind. Sie erfordern daher verhältnismäßig große Flächen. Bei Verschmutzungen, die in derartigen Räumen zu befürchten sind, lassen sie in ihrer Wirksamkeit noch weiter nach. Eine Aufladung des Akkumulators ist zudem in den verhältnismäßig langen Dunkelzeiten nicht möglich.

Es ist auch bekannt, zur Stromversorgung sanitärer Armaturen Peltierelemente einzusetzen, die aber nur dann wirksam sein können, wenn Warmwasser zur Verfügung steht und dieses auch fließt. Wird die Sanitärarmatur längere Zeit nicht von Warmwasser durchflossen, reichen Peltierelemente als Stromversorgungsquelle nicht mehr aus.

Ähnliche Probleme ergeben sich mit mechanischen Turbinen, die von dem strömenden Wasser in Drehung versetzt werden und einen elektrischen Generator antreiben. Auch derartige Einrichtungen setzen einen verhältnismäßig häufigen Wasserfluß voraus; bei längerem Stillstand der Sanitärarmatur findet eine Aufladung des Akkumulators nicht statt.

Die DE 23 55 728 Al offenbart einen Motorgenerator zur Erzeugung elektrischer aus mechanischer Energie, der auch umgekehrt elektrische Energie in mechanische umformt. Der Motorgenerator umfaßt ein rohrförmiges Gehäuse, welches zwei Kammern begrenzt. Die Kammern sind außerdem durch die Stirnwände eines in dem Gehäuse hin- und herbewegbaren Kolbens begrenzt. Der Kolben selbst ist als Permanentmagnet ausgeführt, und die Kammern sind mit elektrisch leitenden Wicklungen versehen, so daß durch diese Einrichtung bei einer Bewegung des Kolbens die von diesem übertragene mechanische Energie in elektrische Energie umgewandelt wird.

Die US 4 645 965 beschreibt einen Drucksensor insbesondere für Verbrennungsmotoren, welcher den in diesen auftretenden hohen Temperaturen und starken Vibrationen widerstehen soll.

In der WO 81 00 274 ist ein pneumatisch betriebener berührungsloser Druckschalter angegeben, welcher insbesondere zur Steuerung der Zugangstüren in öffentlichen Fahrzeugen verwendet werden soll.

Aufgabe der vorliegenden Erfindung ist es, eine Einrichtung der eingangs genannten Art zu schaffen, die auch bei ungünstigen Beleuchtungsverhältnissen ohne zur Verfügung stehendes Wärmereservoir eine elektrische Spannung erzeugt.

Diese Aufgabe wird erfindungsgemäß dadurch gelöst, daß
d) die Kammer mit einem festen Rohrleitungssystem verbindbar ist, in welchem sich eine systemimmanenten Druckschwankungen ausgesetzte Flüssigkeit befindet; und
e) die Wand unter dem Einfluß der systemimmanenten Druckschwankungen der Flüssigkeit hin- und herbewegbar ist.

Die Erfindung macht von der Erkenntnis Gebrauch, daß in allen Fluidsystemen, sicherlich aber immer in den Haus-Wasserleitungssystemen, Druckschwankungen vorliegen. Diese Druckschwankungen sind umso stärker, umso mehr Zapfstellen an das Fluidsystem angeschlossen sind. Mit der erfindungsgemäßen Einrichtung wird die Energie, die in diesen Druckschwankungen zur Verfügung steht, zunächst in mechanische und dann in elektrische Energie umgesetzt. Derartige Druckschwankungen liegen bei Tag und Nacht, mit und ohne Beleuchtung, in Kalt- und Warmwassersystemen vor. Die erfindungsgemäße Einrichtung ist somit ununterbrochen in Betrieb und kann 24 Stunden am Tag einen Akkumulator, z.B. einer Sanitärarmatur, aufladen.

Die Einrichtug c) kann ein piezoelektrischer Wandler sein, wie er handelsüblich zum Verkauf angeboten wird. Der normale Einsatzzweck derartiger handelsüblicher piezoelektrischer Wandler ist allerdings umgekehrt: Durch Anlegen einer äußeren Spannung soll eine mechanische Bewegung hervorgerufen werden. Bei der vorliegenden Erfindung wird dagegen die mechanische Bewegung vorgegeben; entsprechend entsteht an den elektrischen Ausgangsklemmen des piezoelektrischen Wandlers eine Spannung, die dann weiter verarbeitet werden kann.

Alternativ kann die Einrichtung c) eine Spule umfassen, welche mit einem relativ zu ihr beweglichen Permanantmagneten zusammenwirkt. Die Umsetzung mechanischer in elektrische Energie erfolgt in diesem Falle durch normale Induktion.

Aus geometrischen Gründen ist es zweckmäßig, wenn die Spule eine Hohlspule ist, innerhalb welcher der Permanentmagnet verschiebbar geführt ist.

Bevorzugt wird dabei, daß der Permanentmagnet mit der beweglichen Wand verbunden und die Spule stationär ist. Auf diese Weise bleiben die mechanischen Teile, welche von den Druckschwankungen im Fluidsystem in Bewegung versetzt werden müssen, verhältnismäßig klein.

Bei einer Ausgestaltung der Erfindung ist nur eine Kammer in dem Gehäuse vorgesehen, die mit einem Fluidsystem verbindbar ist, wobei das die bewegbare Wand bildende Bauteil auf der der ersten Kammer gegenüberliegenden Seite eine weitere Kammer begrenzt, welche mit der Außenatmosphäre in Verbindung steht. Diese Ausführungsform der Erfindung nutzt somit die Druckdifferenz zwischen dem Fluidsystem und der Außenatmosphäre.

Dabei empfiehlt sich, daß die Einrichtung c) in der zweiten Kammer angeordnet ist, wo sie direkten Einflüssen des Fluidsystems (selbstverständlich aber nicht den übertragenen Druckschwankungen) entzogen, z.B. nicht "im Nassen" ist.

Sehr häufig stehen zwei Fluidsysteme zur Verfügung, die voneinander getrennt sind und jeweils gesonderte Druckschwankungen zeigen. Im Sanitärwesen handelt es sich dabei um das Kalt- und das Warmwasser-Hausleitungssystem. Für diesen Fall empfiehlt sich eine Ausgestaltung der Erfindung, bei welcher zwei Kammern in dem Gehäuse vorgesehen sind, die mit zwei unterschiedlichen Fluidsystemen verbunden sind, wobei die zu den beiden Kammern gehörenden beweglichen Wände derart miteinander verbunden sind, daß sie sich gemeinsam entsprechend der Differenz der in den beiden Fluidsystemen herrschende Drucke bewegen. Die so erhaltenen Druckdifferenzen können sehr viel größer sein als diejenigen, die ein einziges Fluidsystem gegenüber der Außenatmosphäre zeigt; entsprechend größer ist die Ausbeute an elektrischer Energie.

Geometrisch besonders klein baut in diesem Fall ein Ausführungsbeispiel, bei welchem die beiden beweglichen Wände auf gegenüberliegenden Seite desselben Bauteiles ausgebildet sind, welches etwa in der Mitte des Gehäuses angeordnet ist, wobei zwei Einrichtungen c) vorgesehen sind, die jeweils in den beiden mit den Fluidsystemen verbindbaren Kammern angeordnet sind.

Alternativ hierzu ist auch diejenige Ausgestaltung der Erfindung möglich, bei der die beiden beweglichen Wände an räumlich getrennten Bauteilen ausgebildet sind, die mechanisch miteinander verbunden sind und zwischen denen eine Einrichtung c) angeordnet ist. Dieses Ausführungsbeispiel hat den Vorteil, daß die Einrichtung c) in einem "trockenen", jedenfalls von dem Fluidsystem nicht unmittelbar erreichbaren Raum, zwischen den beiden beweglichen Wänden untergebracht werden kann.

Sofern die beweglichen Wände nicht ausreichende Eigenelastizität haben oder in anderer Weise nach einer Auslenkung zurückgestellt werden, empfiehlt sich, wenn die bewegliche Wand von einer Rückstellfeder beaufschlagt ist.

Die bewegliche Wand kann an einer Membran ausgebildet sein, die mit ihrem Außenumfang am Gehäuse festgelegt wird. Eine solche Membran ist sehr preiswert und nimmt verhältnismäßig wenig Raum ein.

Alternativ kann die bewegliche Wand an einem Kolben ausgebildet sein, der innerhalb des Gehäuses linear verschiebbar ist. Ein derartiger Kolben nimmt zwar etwas mehr Raum ein als eine Membran, ist jedoch etwas weniger alterungsgefährdet.

Im allgemeinen wird es zweckmäßig sein, wenn die erfindungsgemäße Einrichtung einen Akkumulator zur Speicherung der gewonnenen elektrischen Energie und einen elektronischen Schaltkreis umfaßt, welcher die von der Einrichtung, die mit der bewegbaren Wand verbunden ist, unmittelbar abgegebene elektrische Energie in eine Form umsetzt, die in den Akkumulator einspeisbar ist. Im Regelfall ist nämlich die unmittelbar gewonnene elektrische Energie nicht direkt verwertbar, da ihr zeitlicher Anfall zu unregelmäßig und die gewonnene Leistung für manche Anwendungszwecke ohne Speicherung nicht ausreichend ist.

Ein Haupteinsatzgebiet der Erfindung besteht in der Verwendung einer solchen Einrichtung zur Stromversorgung eines elektrisch betätigten Gerätes, insbesondere einer elektrisch betätigten Sanitärarmatur, wobei das oder die Fluidsystem(e) durch ein Haus-Wasserleitungssystem gebildet wird (werden).

Ausführungsbeispiele der Erfindung werden nachfolgend anhand der Zeichnung näher erläutert; es zeigen
- Figur 1:: einen Axialschnitt durch ein erstes Ausführungsbeispiel einer Einrichtung zur Umwandlung von Druckschwankungen in Leitungssystemen in elektrische Energie;
- Figur 2:: einen Axialschnitt durch ein zweites Ausführungsbeispiel einer solchen Einrichtung;
- Figur 3:: einen Axialschnitt durch ein drittes Ausführungsbeispiel einer solchen Einrichtung;
- Figur 4:: einen Axialschnitt durch ein viertes Ausführungsbeispiel einer solchen Einrichtung.

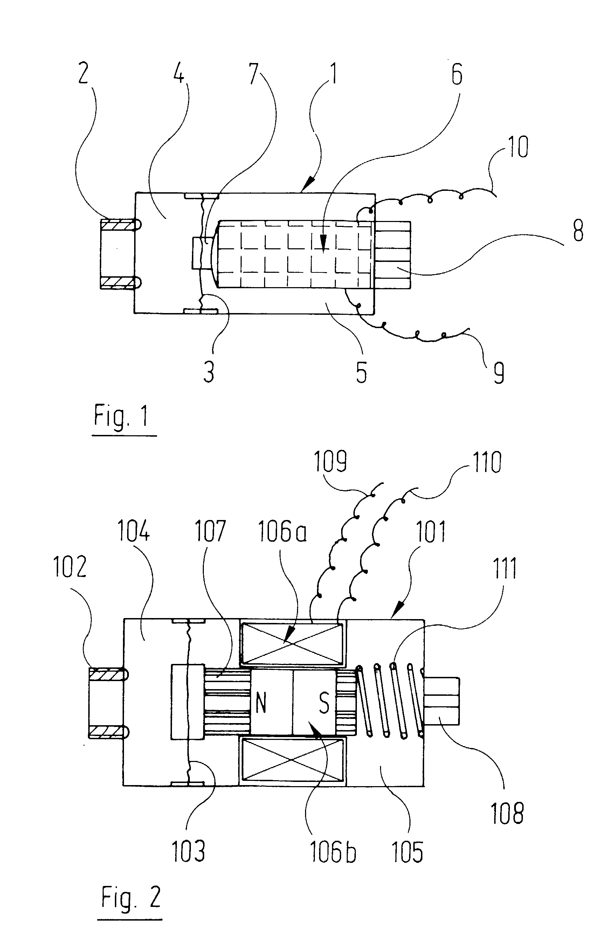

Das in Figur 1 dargestellte Ausführungsbeispiel einer Einrichtung zur Umwandlung von Druckschwankungen in Leitungssystemen in elektrische Energie umfaßt ein Gehäuse 1, welches mit einem Anschlußstutzen 2 versehen ist. Ein Haupteinsatzgebiet der Erfindung besteht in der Verwendung einer solchen Einrichtung zur Stromversorgung einer elektrisch betätigten Sanitärarmatur, wobei das oder die Fluidsystem(e) durch ein Haus-Wasserleitungssystem gebildet wird (werden).

Anschlußstutzen 2 dient der Verbindung der Einrichtung mit einer Wasserleitung, z.B. Hausleitung, in welcher auch bei ruhendem Wasserfluß Druckfluktuationen herrschen.

Der Innenraum des Gehäuses 1 ist durch eine flexible Membran 3 in zwei Kammern 4 und 5 unterteilt. Die Membran 3 ist an ihrem Außenumfang dicht an der Innenfläche der Wand des Gehäuses 1 festgelegt.

Die in Figur 1 linke Kammer 4 ist über den Anschlußstutzen 2 mit Wasser aus der angeschlossenen Wasserleitung angefüllt und überträgt die dort herrschenden Druckschwankungen auf die Membran 3.

In der in Figur 1 rechten Kammer 5 des Gehäuses 1 ist ein piezoelektrischer Wandler 6 befestigt. Derartige piezoelektrische Wandler 6 sind handelsüblich und werden im allgemeinen dazu verwendet, bei Anlegen einer äußeren Spannung eine Linearbewegung eines Ausgangsgliedes herbeizuführen. Im vorliegenden Falle wird der piezoelektrische Wandler 6 umgekehrt betrieben: Durch mechanische Bewegung seines Ausgangsgliedes 7 wird eine elektrische Spannung erzeugt. Hierzu ist das Ausgangsglied 7 des piezoelektrischen Wandlers 6 im mittleren Bereich,der Membran 3 festgelegt.

Die Kammer 5 des Gehäuses 1 ist außerdem über eine Entlüftungsöffnung 8 mit der Umgebungsatmosphäre verbunden.

Die beschriebene Einrichtung arbeitet wie folgt:

Ist der Anschlußstutzen 2 in der oben schon angedeuteten Weise mit einer Wasserleitung verbunden, in welcher Druckschwankungen herrschen, so übertragen sich diese Druckschwankungen über das bis in die Kammer 4 des Gehäuses 1 hineinreichende Wasser auf die Membran 3. Diese wird dabei in Schwingungen versetzt, welche den Druckpulsationen in der Kammer 4 folgen. Die Schwingungen der Membran 3 übertragen sich auf das Ausgangsglied 7 des piezoelektrischen Wandlers, das unter dem Einfluß der Druckschwankungen in der Kammer 4 also eine Bewegung ausführt. Die Bewegungen des Ausgangsgliedes 7 des piezoelektrischen Wandlers, der im vorliegenden Falle als Eingangsglied genutzt wird, führen zu einer elektrischen Spannung, die an den elektrischen Klemmen 9, 10 des piezoelektrischen Wandlers 6 abgegriffen und durch eine entsprechende Elektronik, die nicht Gegenstand der vorliegenden Erfindung ist, zur Speicherung in einem Akkumulator oder dergleichen verwendet werden kann.

Das Ausführungsbeispiel der Erfindung nach Figur 2 ist demjenigen von Figur 1 sehr ähnlich; entsprechende Teile sind daher mit denselben Bezugszeichen, zuzüglich 100, gekennzeichnet. Wiederum findet sich ein Gehäuse 101, welches durch eine an ihrem Umfangsrand festgelegte Membran 103 in zwei Kammern 104 und 105 unterteilt ist. Die Kammer 104 steht über einen Anschlußstutzen 102 mit einem Wasserleitungsrohr in Verbindung, in dem Druckschwankungen auftreten.

In der "trockenen" Kammer 105 des Gehäuses 101 ist eine Hohlspule 106a befestigt. In der Hohlspule 106a ist ein Permanentmagnet 106b verschiebbar geführt, der über eine Art Stößel 107 mit der Membran 103 verbunden und an dieser befestigt ist. Zwischen dem von der Membran 103 abgewandten, also in Figur 2 rechten Ende des Stößels 107 bzw. des Permanentmagneten 106b und der in Figur 2 rechten Begrenzungswand der Kammer 105 ist eine Druckfeder 111 eingespannt, welche den Stößel 107 und damit den Permanentmagneten 106b in Richtung auf die Membran 103 drückt.

Die Kammer 105 ist wiederum über eine Entlüftungsöffnung 108 mit der Außenatmosphäre verbunden.

Die Funktionsweise des in Figur 2 dargestellten Ausführungsbeispieles ist wie folgt:

Treten in dem an den Anschlußstutzen 102 angeschlossenen Rohrleitungssystem und damit auch in der Kammer 104 des Gehäuses 101 Druckschwankungen auf, so werden diese über die Membran 103 auf den Permanentmagneten 106b übertragen. Dieser führt in der Folge lineare, hin- und hergehende Bewegungen innerhalb der Hohlspule 106a aus. Durch Induktionswirkung entsteht an den elektrischen Anschlußklemmen 109, 110 der Hohlspule 106a eine elektrische Spannung, die wiederum der elektronischen Weiterverarbeitung und letztendlich der Speicherung in einem Akkumulator zugeführt wird.

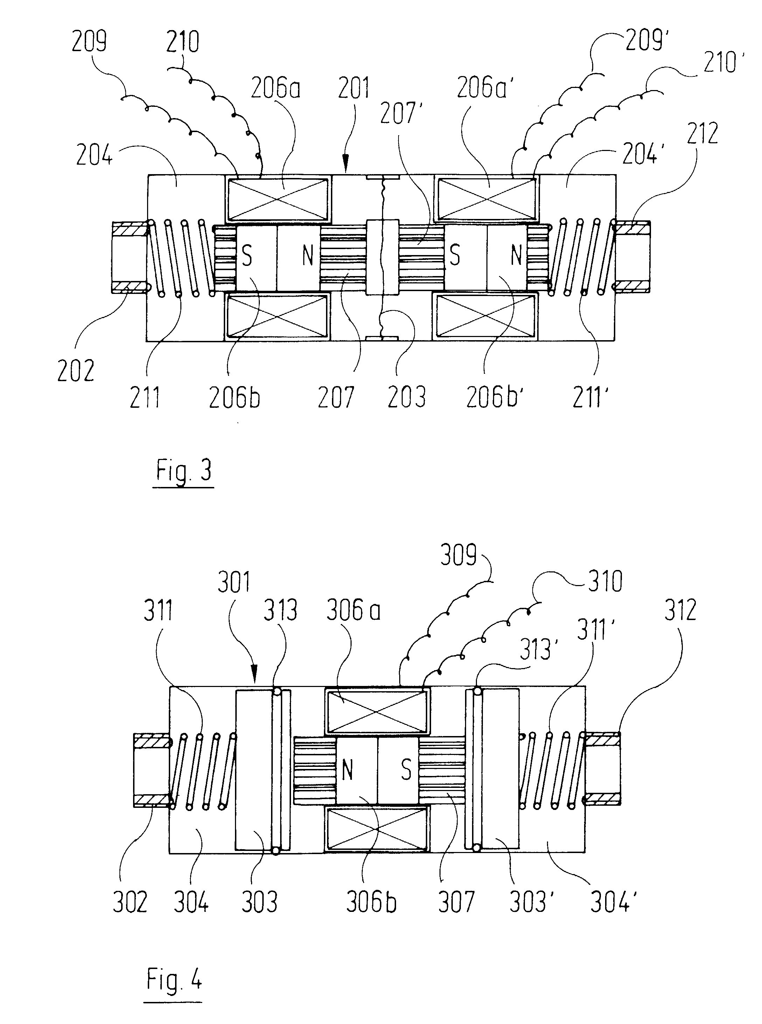

Die oben beschriebenen Ausführungsbeispiele nach den Figuren 1 und 2 werden dort eingesetzt, wo nur ein mit Druckschwankungen behaftetes Fluidsystem zur Verfügung steht. In vielen Fällen, insbesondere im Sanitärwesen, stehen jedoch zwei derartige Fluidsysteme zur Verfügung, z.B. das Kalt- und Warmwassernetz in einem Wohnhaus. Für derartige Anwendungsfälle sind die Ausführungsbeispiele nach den Figuren 3 und 4 gedacht.

Beim Ausführungsbeispiel von Figur 3 sind Teile, die solchen der Figur 1 entsprechen, mit denselben Bezugszeichen, zuzüglich 200, gekennzeichnet.

Die in Figur 3 dargestellte Einrichtung zur Umwandlung von Druckschwankungen in elektrische Energie umfaßt wiederum ein Gehäuse 201, welches durch eine Membran 203 in zwei Kammern 204 und 204' unterteilt ist. Die Membran 203 liegt dabei symmetrisch in der Mitte des Gehäuses 201.

Die in Figur 3 links liegende Kammer 204 weist wiederum einen Anschlußstutzen 202 auf, der mit einem der beiden zur Verfügung stehenden Fluidsysteme, beispielsweise mit dem Warmwasser-Hausleitungssystem in einer Wohnung, verbunden wird. Innerhalb der Kammer 204 und damit - anders als beim Ausführungsbeispiel von Figur 2 - in dem vom Fluid erreichbaren, z.B. nassen Bereich, ist eine Hohlspule 206a angeordnet. In dieser ist ein Permanentmagnet 206b verschiebbar geführt, über einen Stößel 207 mit der Membran 203 verbunden und an dieser befestigt. Eine Druckfeder 211 ist zwischen der in Figur 3 linken Begrenzungswand der Kammer 204 und dem linken Ende des Stößels 207 bzw. des Permanentmagneten 206b eingespannt und drückt letzteren nach rechts, also in Richtung auf die Membran 203.

Die Kammer 204' des Ausführungsbeispieles von Figur 3 ist - anders als die Kammern 5 und 105 der Ausführungsbeispiele nach den Figuren 1 und 2 - vollständig symmetrisch zur Kammer 204 ausgebildet, ebenso wie alle in dieser Kammer 204' untergebrachten Bauelemente. Innerhalb der Kammer 204' befinden sich also ebenfalls eine Hohlspule 206a', ein hierin geführter Permanentmagnet 206b', ein den Permanentmagneten 206b' mit der Membran 203 verbindender Stößel 207' und eine Druckfeder 211', welche zwischen der in Figur 3 rechten Begrenzungswand der Kammer 204' und dem in Figur 3 rechten Ende des Stößels 207' bzw. des Permanentmagneten 206b' eingespannt ist und den Permanentmagneten 206b' nach links, auf die Membran 203 zu, drückt.

Die Kammer 204'ist mit einem eigenen Anschlußstutzen 212 versehen, der mit dem zweiten zur Verfügung stehenden Fluidsystem, also beispielsweise mit dem Kaltwasser-Hausleitungssystem einer Wohnung, verbunden ist.

Die Funktion des Ausführungsbeispieles von Figur 3 ist wie folgt:

Auf die Membran 203 wirkt nach dem Anschluß der Einrichtung an die beiden Fluidsysteme jeweils die Differenz der momentanen Drucke in den beiden Fluidsystemen. Diese Differenz kann erheblich größer sein als die Druckschwankungen, die in einem einzigen Fluidsystem auftreten. Unter dem Einfluß des Differenzdruckes bewegt sich die Membran 203 und bewegen sich damit die Permanentmagneten 206b und 206b' in den Hohlspulen 206a und 206a'. Durch Induktion entstehen in den Hohlspulen 206a und 206a' an deren elektrischen Klemmen 209, 210 und 209', 210' elektrische Spannungen, die erneut einer elektronischen Verarbeitung und der Speicherung in einem Akkumulator zugeführt werden können.

Bei der nachfolgenden Beschreibung des in Figur 4 dargestellten Ausführungsbeispieles werden für Teile, die solchen der Figur 1 entsprechen, wiederum dieselben Bezugszeichen, jedoch zuzüglich 300, verwendet.

Das Gehäuse 301 ist an seinem in Figur 4 linken Ende mit einem ersten Anschlußstutzen 302 und an seinem in Figur 4 rechten Ende mit einem zweiten Anschlußstutzen 312 versehen. In der Mitte des Gehäuses 301 ist stationär eine Hohlspule 306a befestigt. Innerhalb der Hohlspule 306a ist ein Permanentmagnet 306b verschiebbar geführt und über einen beidseits über den Permanentmagneten 306b hinausragenden Stößel 307 mit zwei Kolben 303 und 303' verbunden. Die Kolben 303 und 303' sind über eine jeweils in die Mantelfläche eingelegte Dichtung 313 bzw. 313' gegen das Gehäuse 301 abgedichtet. Zwischen der Rückseite der Kolben 303 und 303' und der jeweils benachbarten Wand des Gehäuses 301 ist jeweils eine Druckfeder 311, 311' eingespannt, welche den zugehörigen Kolben 303, 303' in Richtung auf die Gehäusemitte, also auf die Hohlspule 306a zu zu drücken sucht.

Die Funktionsweise des in Figur 4 dargestellten Ausführungsbeispieles ist wie folgt:

Nachdem die Anschlußstutzen 302 und 312 jeweils an eines der Fluidsysteme, beispielsweise an das Kalt- und das Warmwasser-Hausleitungssystem einer Wohnung, angeschlossen sind, füllen sich die auf der Rückseite der Kolben 303 und 303' liegenden Räume 304 und 304' mit dem entsprechenden Fluid an. Der Druck in der Kammer 304 sucht den Kolben 303 nach rechts zu drücken; der Druck in der Kammer 304' sucht den Kolben 303' nach links zu drücken. Aufgrund der starren Verbindung der beiden Kolben 303 und 303' über den Stößel 307 bewegt sich die aus den beiden Kolben 303, 303', dem Stößel 307 und dem Permanentmagneten 306b gebildete Einheit unter dem Einfluß der Differenz der Drücke, die in den beiden Kammern 304 und 304' herrschen. Wiederum entsteht auf diese Weise eine hin- und hergehende Bewegung des Permanentmagneten 306b innerhalb der Hohlspule 306a, wodurch in der Hohlspule 306a eine Spannung induziert wird. Diese läßt sich an den elektrischen Klemmen 309, 310 abgreifen und einer elektronischen Weiterverarbeitung zur Speicherung in einem Akkumulator zuführen.

## Patentansprüche

1. Einrichtung zur Umwandlung von mechanischer in elektrische Energie, welche umfaßt:
a) ein Gehäuse (1; 101; 201; 301),
b) mindestens eine in dem Gehäuse (1; 101; 201; 301) gebildete Kammer (4; 104; 204; 304), welche an der einen Seite durch eine Wand (3; 103; 203; 303, 303') begrenzt ist, die hin- und her bewegbar ist,
c) mindestens eine Einrichtung (6; 106a, 106b; 206a, 206b, 206a', 206b'; 306a, 306b), die mit der bewegbaren Wand (3; 103; 203; 303, 303') verbunden ist und die von dieser übertragene mechanische Energie in elektrische Energie umwandelt;
dadurch gekennzeichnet, daß
d) die Kammer (4, 104; 204; 304) mit einem festen Rohrleitungssystem verbindbar ist, in welchem sich eine systemimmanenten Druckschwankungen ausgesetzte Flüssigkeit befindet; und
e) die Wand (3; 103; 203; 303, 303') unter dem Einfluß der systemimmanenten Druckschwankungen der Flüssigkeit hin- und herbewegbar ist.

2. Einrichtung nach Anspruch 1, dadurch gekennzeichnet, daß die Einrichtung c) ein piezoelektrischer Wandler (6) ist.

3. Einrichtung nach Anspruch 1, dadurch gekennzeichnet, daß die Einrichtung c) eine Spule (106a; 206a, 206a'; 306a) umfaßt, welche mit einem relativ zu ihr beweglichen Permanentmagneten (106b; 206b, 206b'; 306b) zusammenwirkt.

4. Einrichtung nach Anspruch 3, dadurch gekennzeichnet, daß die Spule (106a; 206a, 206a'; 306a) eine Hohlspule ist, innerhalb welcher der Permanentmagnet (106b; 206b, 206b'; 306b) verschiebbar geführt ist.

5. Einrichtung nach Anspruch 3 oder 4, dadurch gekennzeichnet, daß der Permanentmagnet (106b; 206b, 206b'; 306b) mit der beweglichen Wand (103; 203; 303, 303') verbunden und die Spule (106a; 206a, 206a'; 306a) stationär ist.

6. Einrichtung nach einem der vorhergehenden Ansprüche, dadurch gekennzeichnet, daß nur eine Kammer (4; 104) in dem Gehäuse (1; 101) vorgesehen ist, die mit einem Fluidsystem verbindbar ist, und daß das die bewegliche Wand (3; 103) bildende Bauteil auf der der ersten Kammer (4; 104) gegenüberliegenden Seite eine weitere Kammer (5; 105) begrenzt, welche mit der Außenatmosphäre in Verbindung steht.

7. Einrichtung nach Anspruch 6, dadurch gekennzeichnet, daß die Einrichtung c) in der zweiten Kammer (5; 105) angeordnet ist.

8. Einrichtung nach einem der Ansprüche 1 bis 5, dadurch gekennzeichnet, daß zwei Kammern (204, 204'; 304, 304') in dem Gehäuse (201; 301) vorgesehen sind, die mit zwei unterschiedlichen Fluidsystemen verbindbar sind, und daß die zu den beiden Kammern (204, 204'; 304, 304') gehörenden beweglichen Wände (203; 303, 303') derart miteinander verbunden sind, daß sie sich gemeinsam entsprechend der Differenz der in den beiden Fluidsystemen herrschenden Drucke bewegen.

9. Einrichtung nach Anspruch 8, dadurch gekennzeichnet, daß die beiden beweglichen Wände auf gegenüberliegenden Seiten desselben Bauteils (203) ausgebildet sind, welches etwa in der Mitte des Gehäuses (201) angeordnet ist, und daß zwei Einrichtungen c) vorgesehen sind, die jeweils in den beiden mit den Fluidsystemen verbindbaren Kammern (204; 204') angeordnet sind.

10. Einrichtung nach Anspruch 8, dadurch gekennzeichnet, daß die beiden beweglichen Wände an räumlich getrennten Bauteilen (303, 303') ausgebildet sind, die mechanisch miteinander verbunden sind und zwischen denen eine Einrichtung c) angeordnet ist.

11. Einrichtung nach einem der vorhergehenden Ansprüche, dadurch gekennzeichnet, daß die bewegliche Wand (103; 203; 303, 303') von einer Rückstellfeder (111; 211, 211'; 311, 311') beaufschlagt ist.

12. Einrichtung nach einem der vorhergehenden Ansprüche, dadurch gekennzeichnet, daß die bewegliche Wand an einer Membran (3; 103; 203) ausgebildet ist, die mit ihrem Außenumfang am Gehäuse (1; 101; 201) festgelegt ist.

13. Einrichtung nach einem der Ansprüche 1 bis 11, dadurch gekennzeichnet, daß die bewegliche Wand an einem Kolben (303, 303') ausgebildet ist, der innerhalb des Gehäuses (301) linear verschiebbar ist.

14. Einrichtung nach einem der vorhergehenden Ansprüche, dadurch gekennzeichnet, daß sie einen Akkumulator zur Speicherung der gewonnenen elektrischen Energie und einen elektronischen Schaltkreis umfaßt, welcher die von der Einrichtung (6; 106a, 106b; 206a, 206b, 206a', 206b'; 306a, 306b), die mit der bewegbaren Wand verbunden ist, unmittelbar abgegebene elektrische Energie in eine Form umwandelt, die in den Akkumulator einspeisbar ist.

15. Verwendung einer Einrichtung nach einem der vorhergehenden Ansprüche zur Stromversorgung eines elektrisch betriebenen Geräts.

16. Verwendung einer Einrichtung nach Anspruch 15 zur Stromversorgung einer elektrisch betätigten Sanitärarmatur, wobei das oder die Fluidsystem(e) jeweils durch ein Haus-Wasserleitungssystem gebildet wird (werden).

## Claims

1. An apparatus for converting mechanical energy into electrical energy, comprising:
a) a housing (1; 101; 201; 301),
b) at least one chamber (4; 104; 204; 304) formed in the housing (1; 101; 201; 301) and defined on one side by a wall (3; 103; 203; 303, 303') which may be moved to and fro,
c) at least one apparatus (6; 106a, 106b; 206a, 206b, 206a', 206b'; 306a, 306b) which is connected with. the movable wall (3; 103; 203; 303, 303') and which converts the mechanical energy imparted thereby into electrical energy;
characterised in that
d) the chamber (4; 104; 204; 304) may be connected with a fixed piping system containing a fluid exposed to pressure variations inherent in the system; and
e) the wall (3; 103; 203; 303, 303') may be moved to and fro under the influence of the fluid pressure variations inherent in the system.

2. An apparatus according to claim 1, characterised in that the apparatus c) is a piezoelectric transducer (6).

3. An apparatus according to claim 1, characterised in that the apparatus c) comprises a coil (106a; 206a, 206a'; 306a) which interacts with a permanent magnet (106b; 206b, 206b'; 306b) which may be moved relative thereto.

4. An apparatus according to claim 3, characterised in that the coil (106a; 206a, 206a'; 306a) is a hollow coil, within which the permanent magnet (106b; 206b, 206b'; 306b) is displaceably guided.

5. An apparatus according to claim 3 or 4, characterised in that the permanent magnet (106b; 206b, 206b'; 306b) is connected with the movable wall (103; 203; 303, 303') and the coil (106a; 206a, 206a'; 306a) is stationary.

6. An apparatus according to one of the preceding claims, characterised in that only one chamber (4; 104) is provided in the housing (1; 101) and may be connected with a fluid system, and in that the component forming the movable wall (3; 103) defines a further chamber (5; 105) on the opposite side from the first chamber (4; 104), which further chamber (5; 105) is conn.ected with the outer atmosphere.

7. An apparatus according to claim 6, characterised in that the apparatus c) is arranged in the second chamber (5; 105).

8. An apparatus according to one of claims 1 to 5, characterised in that two chambers (204, 204'; 304, 304') are provided in the housing (201; 301) and may be connected with two different fluid systems, and in that the movable walls (203; 303, 303') associated with the two chambers (204, 204'; 304, 304') are connected together in such a way that they move in common in accordance with the difference between the pressures prevailing in the two fluid systems.

9. An apparatus according to claim 8, characterised in that the two movable walls are formed on opposite sides of the same component (203), which is arranged approximately in the middle of the housing (201), and in that two apparatuses c) are provided which are each arranged in the two chambers (204; 204') capable of connection with the fluid systems.

10. An apparatus according to claim 8, characterised in that the two movable walls take the form of spaced components (303, 303'), which are connected together mechanically and between which there is arranged an apparatus c).

11. An apparatus according to one of the preceding claims, characterised in that the movable wall (103; 203; 303, 303') is loaded by a return spring (111; 211; 211'; 311, 311').

12. An apparatus according to one of the preceding claims, characterised in that the movable wall takes the form of a diaphragm (3; 103; 203) fixed to the housing (1; 101; 201) by its outer circumference.

13. An apparatus according to one of claims 1 to 11, characterised in that the movable wall takes the form of a piston (303, 303') which may be displaced linearly within the housing (301).

14. An apparatus according to one of the preceding claims, characterised in that it comprises an accumulator for storing the electrical energy obtained and an electronic circuit which converts the electrical energy output directly by the apparatus (6; 106a, 106b; 206a, 206b, 206a', 206b'; 306a, 306b), which is connected with the movable wall, into a form which may be fed into the accumulator.

15. Use of an apparatus according to one of the preceding claims for supplying power to an electrically operated device.

16. Use of an apparatus according to claim 15 for supplying power to an electrically operated sanitary appliance, wherein the fluid system(s) in each case is (are) formed by a domestic plumbing system.

## Revendications

1. Dispositif pour transformer de l'énergie mécanique en énergie électrique, comprenant :
a) un boîtier (1 ; 101 ; 201 ; 301),
b) au moins une chambre (4 ; 104 ; 204 ; 304) formée dans le boîtier (1 ; 101 ; 201 ; 301), qui est délimitée sur un côté par une cloison (3 ; 103 ; 203 ; 303, 303') qui est mobile en va-et-vient,
c) au moins un dispositif (6 ; 106a, 106b ; 206a, 206b, 206a', 206b'; 306a, 306b), qui est relié à la cloison mobile (3 ; 103 ; 203 ; 303, 303') et qui transforme en énergie électrique l'énergie mécanique transmise par cette cloison ;
**caractérisé** en ce que
d) la chambre (4 ; 104 ; 204 ; 304) peut être raccordée à un système de conduites rigides, dans lequel se trouve un liquide exposé à des fluctuations de pression inhérentes au système ; et
e) la cloison (3 ; 103 ; 203 ; 303, 303') peut être déplacée en va-et-vient sous l'influence des fluctuations de pression du liquide, inhérentes au système.

2. Dispositif selon la revendication 1, **caractérisé** en ce que le dispositif c) est un convertisseur piézoélectrique (6).

3. Dispositif selon la revendication 1, **caractérisé** en ce que le dispositif c) comprend une bobine (106a ; 206a, 206a'; 306a), qui coopère avec un aimant permanent (106b ; 206b, 206b'; 306b) mobile par rapport à elle.

4. Dispositif selon la revendication 3, **caractérisé** en ce que la bobine (106a ; 206a, 206a'; 306a) est une bobine creuse, à l'intérieur de laquelle l'aimant permanent (106b ; 206b, 206b'; 306b) est guidé en translation.

5. Dispositif selon la revendication 3 ou 4, **caractérisé** en ce que l'aimant permanent (106b ; 206b, 206b'; 306b) est relié à la cloison mobile (103 ; 203 ; 303, 303'), et la bobine (106a ; 206a, 206a' ; 306a) est stationnaire.

6. Dispositif selon une des revendications précédentes, **caractérisé** en ce qu'une seule chambre (4 ; 104) pouvant être raccordée à un système hydraulique est prévue dans le boîtier (1 ; 101), et en ce que l'élément constituant la cloison mobile (3 ; 103) délimite, sur le côté opposé à la première chambre (4; 104), une autre chambre (5; 105) qui communique avec l'atmosphère extérieure.

7. Dispositif selon la revendication 6, **caractérisé** en ce que le dispositif c) est disposé dans la deuxième chambre (5 ; 105).

8. Dispositif selon une des revendications 1 à 5, **caractérisé** en ce que deux chambres (204, 204'; 304, 304'), qui peuvent être raccordées à deux systèmes hydrauliques différents, sont prévues dans le boîtier (201; 301), et en ce que les cloisons mobiles (203 ; 303, 303') associées aux deux chambres (204, 204'; 304, 304') sont mutuellement reliées de telle sorte qu'elles se déplacent conjointement conformément à la différence des pressions régnant dans les deux systèmes hydrauliques.

9. Dispositif selon la revendication 8, **caractérisé** en ce que les deux cloisons mobiles sont configurées sur des côtés opposés du même élément (203) qui est disposé environ au milieu du boîtier (201), et en ce que deux dispositifs c) sont prévus, qui sont respectivement disposés dans les deux chambres (204 ; 204') pouvant être raccordées aux systèmes hydrauliques.

10. Dispositif selon la revendication 8, **caractérisé** en ce que les deux cloisons mobiles sont configurées sur des éléments spatialement séparés (303, 303'), qui sont mécaniquement reliés entre eux et entre lesquels est disposé un dispositif c).

11. Dispositif selon une des revendications précédentes, **caractérisé** en ce que la cloison mobile (103 ; 203 ; 303, 303') est sollicitée par un ressort de rappel (111 ; 211, 211' ; 311, 311').

12. Dispositif selon une des revendications précédentes, **caractérisé** en ce que la cloison mobile est configurée sur une membrane (3; 103 ; 203), qui est fixée en position sur le boîtier (1; 101; 201) par sa périphérie extérieure.

13. Dispositif selon une des revendications 1 à 11, **caractérisé** en ce que la cloison mobile est configurée sur un piston (303, 303'), qui peut être déplacé en translation linéaire à l'intérieur du boîtier (1).

14. Dispositif selon une des revendications précédentes, **caractérisé** en ce qu'il comprend un accumulateur pour emmagasiner l'énergie électrique obtenue, et un circuit électronique qui transforme l'énergie électrique, directement délivrée par le dispositif (6 ; 106a, 106b ; 206a, 206b, 206a', 206b'; 306a, 306b) qui est relié à la cloison mobile, sous une forme qui peut être emmagasinée dans l'accumulateur.

15. Utilisation d'un dispositif selon une des revendications précédentes pour l'alimentation en courant d'un appareil à fonctionnement électrique.

16. Utilisation d'un dispositif selon la revendication 15 pour l'alimentation en courant d'un appareil de robinetterie sanitaire à actionnement électrique, le ou les systèmes hydrauliques étant respectivement formés par un système domestique de conduites d'eau.
